# EUROPÄISCHE PATENTANMELDUNG

(11) **EP 1 580 033 A1**
(43) Veröffentlichungstag der Anmeldung: **28.09.2005**
(21) Anmeldenummer: 04007317.3
(22) Anmeldetag: 26.03.2004
(51) Int. Cl.: B60C 11/11, B60C 11/13

(54) **Fahrzeugluftreifen**

(71) Anmelder: Continental Aktiengesellschaft, 30165 Hannover (DE)
(72) Erfinder: METZ, Markus, 31535 Neustadt (DE)

(57) **Zusammenfassung**

Die Erfindung betrifft einen Fahrzeugluftreifen mit einem Laufstreifenprofil mit durch Umfangsnuten (1, 4) und Quernuten (7, 8) gebildeten Blöcken (5, 6).

Es sind Blöcke (5) vorhanden, deren Blockflankenbereich, welcher beim Abrollen des Reifens zuerst mit dem Untergrund in Kontakt tritt, derart abgeschrägt ist, dass die an der Laufflächenperipherie vorliegende einlaufende Kante (9) zumindest zum Teil in Richtung der auslaufende Kante (10) versetzt worden ist.

## Beschreibung

Die Erfindung betrifft einen Fahrzeugluftreifen mit einem Laufstreifenprofil mit durch Umfangsnuten und Quernuten gebildeten Blöcken.

Aus der EP-B-0 393 873 ist beispielsweise ein Fahrzeugluftreifen mit einem Blockprofil bekannt, dessen Blöcke jeweils mit einer Anzahl von Einschnitten versehen sind, welche zumindest im Wesentlichen quer zur Umfangsrichtung des Reifens orientiert sind. Zur Verbesserung der Traktionseigenschaften und zur Vergleichmäßigung des Abriebes ist es aus dieser Druckschrift bekannt, die Laufflächenoberseite zwischen zwei benachbarten Einschnitten abzuschrägen.

Fahrzeugluftreifen mit Laufstreifenprofilen mit Blöcken, die in Blockreihen angeordnet sind, sind in unterschiedlichsten Ausführungsvarianten bekannt, wobei solche Profile sowohl laufrichtungsgebunden als auch von der Laufrichtung unabhängig ausgeführt sein können. Die Anordnung der Umfangsnuten und Quernuten sowie deren Nutenvolumina sollen sicherstellen, dass der Reifen auf nassen Fahrbahnen selbst bei höheren Geschwindigkeiten wenig zum Aufschwimmen neigt. Zu diesem Zweck werden im Laufstreifen Quernuten beispielsweise diagonal verlaufend angeordnet, um Wasser aus dem sich vor dem Reifen bildenden Wasserkeil über Nuten zu verteilen und nach außen abführen zu können. Erschwert wird die Wasserabführung durch den Schaufelrad-Effekt der Profilblöcke. Die steilen Blockflanken "schaufeln" quasi Wasser aus dem Wasserkeil in die Nuten und begünstigen dadurch ein Aufschwimmen des Reifens.

Der Erfindung liegt die Aufgabe zu Grunde, den Laufstreifen eines Fahrzeugluftreifens derart zu gestalten, dass der Schaufelrad-Effekt vermindert wird.

Gelöst wird die gestellte Aufgabe erfindungsgemäß durch Blöcke, deren Blockflankenbereich, welcher beim Abrollen des Reifens zuerst mit dem Untergrund in Kontakt tritt, derart abgeschrägt ist, dass die an der Laufflächenperipherie vorliegende einlaufende Kante zumindest zum Teil in Richtung der auslaufenden Kante versetzt worden ist.

Erfindungsgemäß ausgeführte Profilblöcke treten mit ihren Schrägflächen mit dem sich vor dem Reifen bildenden Wasserkeil in Kontakt und verhindern daher weitgehend das Auftreten des Schauffelrad-Effektes. Das Wasser aus dem Wasserkeil kann ungehinderter durch die Nuten und Rillen des Laufstreifenprofils abgeführt werden.

Gemäß einer bevorzugten Ausführungsform der Erfindung verläuft die durch die Abschrägung gebildete Schrägfläche unter einem Winkel von 30° bis 60° zur radialen Richtung. Derartig verlaufende Schrägflächen wirken besonders effektiv. In diesem Zusammenhang ist es auch von Vorteil, wenn, je nach gewähltem Winkel, die Schrägfläche auf 20% bis 80% der Tiefe der Quernut reicht.

Eine dreieckförmige Ausführung der Schrägfläche ist besonders dann von Vorteil, wenn die betreffende Quernut unter einem größeren Winkel zur Querrichtung des Laufstreifens verläuft. Durch diese Maßnahme lässt sich die einlaufende Kante, gegenüber dem sonstigen Verlauf der Quernut, mehr in Querrichtung des Laufstreifens orientieren.

Die Erfindung lässt sich auch bei Profilen anwenden, die eine bevorzugte Drehrichtung aufweisen. In diesem Fall können Blöcke vorgesehen werden, deren eine Blockflanke, bezogen auf die eine mögliche Drehrichtung, abgeschrägt ist, und es können Blöcke vorgesehen werden, deren andere Blockflanke, bezogen auf die andere Drehrichtung, abgeschrägt ist. Alternativ dazu kann der Laufstreifen mit Blöcken versehen werden, deren beide Blockflanken gemäß der Erfindung abgeschrägt sind.

Weitere Merkmale, Vorteile und Einzelheiten der Erfindung werden nun anhand Zeichnung, die schematisch ein Ausführungsbeispiel darstellt, näher beschrieben. Dabei zeigen
Fig. 1 eine Draufsicht auf eine Teilabwicklung eines Laufstreifens eines Fahrzeugluftreifens,
Fig. 2 eine Schrägansicht zweier Profilblöcke und
Fig. 3 einen Teilschnitt in Umfangsrichtung.

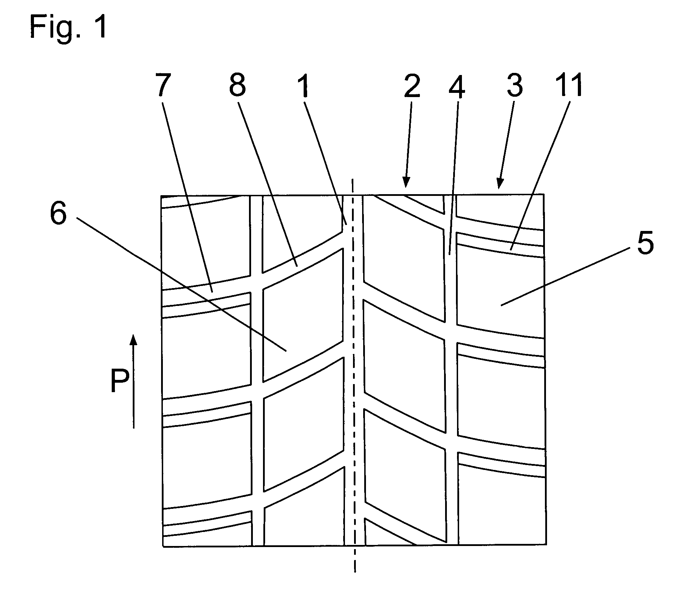

Das in Fig. 1 beispielhaft und vereinfacht gezeigte Laufstreifenprofil für einen Fahrzeugluftreifen für Personenkraftwagen weist eine entlang der Äquatorlinie A-A verlaufende und in Umfangsrichtung gerade umlaufende Nut 1 und in jeder Laufstreifenhälfte zwei Blockreihen 2, 3 auf, welche jeweils durch eine in Umfangsrichtung gerade umlaufende Umfangsnut 4 voneinander getrennt sind. Die Blöcke 5, 6 innerhalb jeder Blockreihe 2, 3 sind voneinander durch Quernuten 7, 8 getrennt, wobei durch den V-förmigen Verlauf der Quernuten 7, 8 über die Laufstreifenbreite ein laufrichtungsgebunden ausgeführtes Laufstreifenprofil gebildet wird. Ein Reifen mit einem derartigen Profil wird so am Fahrzeug montiert, dass die V-Spitzen beim Abrollen des Reifens zuerst in die Kontaktfläche mit dem Untergrund eintreten. Der Pfeil P in Fig. 1 zeigt die Drehrichtung des Reifens. Bei einem Reifen mit einem laufrichtungsgebunden ausgeführten Laufstreifenprofil tritt jeder Block 5, 6 beim Abrollen des Reifens mit einer bestimmten Kante, der sogenannten einlaufenden Kante, zuerst in die Kontaktfläche mit dem Untergrund ein und mit der zweiten Kante, der auslaufenden Kante, aus dem Untergrund aus. Bei der dargestellten Ausführung sind die Blöcke 5, 6 an ihren auslaufenden Kanten 10 herkömmlich ausgeführt, d.h., dass die Kanten 10 an der Laufflächenperipherie in radialer Richtung oder im Wesentlichen in radialer Richtung verlaufende Blockflanken begrenzen.

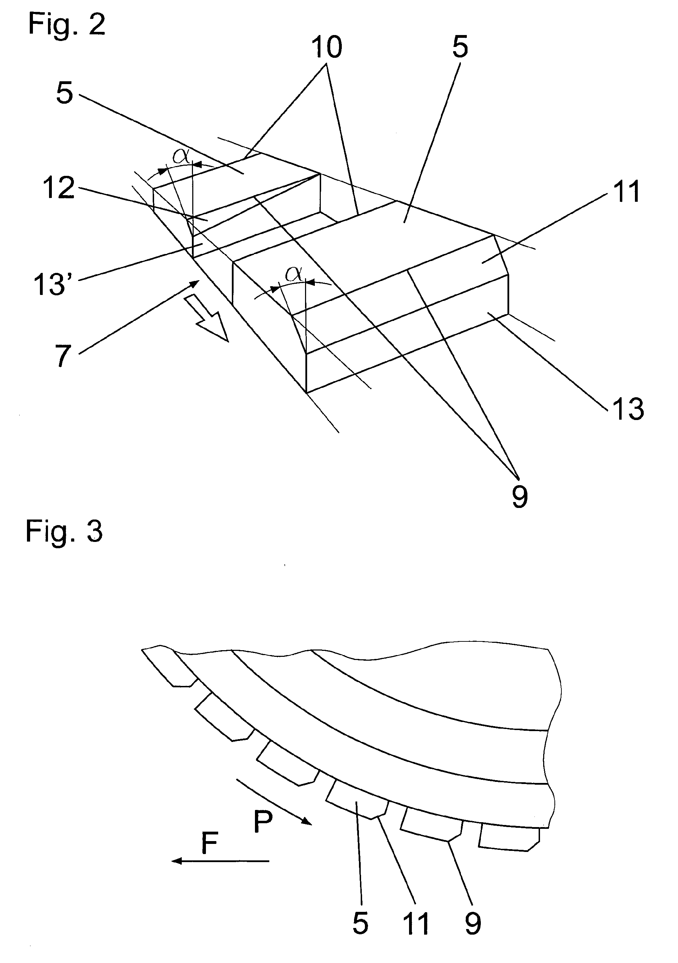

Anhand der Fig. 2 werden nun zwei Varianten der Erfindung bei Blöcken 5 aus der Schulterblockreihe 3 erläutert. Der vordere Block 5 ist entlang seiner "theoretischen" einlaufenden Kante derart abgeschrägt, dass seine einlaufende Kante 9 in Richtung auslaufender Kante 10 versetzt worden ist, wodurch die die betreffende Quernut 7 hier begrenzende Blockflanke, ausgehend von der Laufflächenperipherie, aus einer Schrägfläche 11 und einer Flankenfläche 13 besteht, die auf herkömmliche Weise, in radialer Richtung bzw. im Wesentlichen in radialer Richtung, verläuft. Der Winkel α, den die Schrägfläche 11 mit der Radialen einschließt wird zwischen 30° und 60°, insbesondere etwa 45° gewählt. Je nach der Größe des Winkels α setzt die Schrägfläche 11 in einer Tiefe an, die zwischen 20 % und 80 % der Quernuttiefe beträgt.

Eine zweite Variante der Erfindung ist am rückwärtigen Block 5 in Fig. 2 gezeigt. Der Block 5 ist an seinem einlaufenden Bereich derart abgeschrägt, dass die Schrägfläche 12 die Form eines Dreieckes aufweist. Auch bei dieser Variante ist daher die einlaufende Kante 9 in Richtung auslaufender Kante 10 versetzt. Der Winkel α der Schrägfläche 12 gegenüber der Radialen wird auch bei dieser Ausführungsform in dem oben erwähnten Bereich gewählt. Die tiefste Stelle für den Beginn der Schrägfläche 12 liegt je nach Winkel α zwischen 20% und 80% der Quernuttiefe.

Fig. 3 zeigt einen Umfangsbereich eines am Untergrund abrollenden Reifens. Der Pfeil P zeigt in die Drehrichtung des Reifens, der Pfeil F zeigt in die Fahrtrichtung. Zu erkennen ist, dass die Blöcke 5 mit ihren mit Schrägflächen 11 versehenen Bereichen zuerst in die Kontaktfläche mit dem Untergrund eintreten. Die Schrägflächen 11 verhindern weitgehend den bei üblichen Blockflankenausführungen beim Fahren auf Nässe auftretenden Schaufelrad-Effekt. Vor dem Reifen bildet sich in Abhängigkeit von der Fahrgeschwindigkeit beim Fahren auf nassem Untergrund ein Wasserkeil. Das Wasser aus dem Wasserkeil wird mit herkömmlich ausgeführten Blockflanken geradezu in die Nuten "hineingeschaufelt", wodurch ein Aufschwimmen des Reifens begünstigt wird. Die Schrägflächen vermindern den Schaufelrad-Effekt, da sie eine vorteilhafte Verteilung des Wassers begünstigen.

Die Erfindung ist anhand eines drehrichtungsgebundenen Profils erläutert worden. Es ist jedoch auch möglich, Profile, welche unabhängig von der Drehrichtung sind, erfindungsgemäß auszuführen, indem beispielsweise beide Blockflanken von Blöcken abgeschrägt werden. Dabei ist auch eine Ausführung möglich, bei der beispielsweise in den Schulterblockreihen die einen Blockflanken abgeschrägt werden und in den im Mittelbereich verlaufenden Blockreihen die anderen Blockflanken abgeschrägt werden. Es ist ferner denkbar, die Schrägflächen bzw. Abschrägungen nur über einen Teil der betreffenden Blockflanken vorzunehmen, insbesondere bei dreieckförmigen Schrägflächen.

## Patentansprüche

1. Fahrzeugluftreifen mit einem Laufstreifenprofil mit durch Umfangsnuten (1, 4) und Quernuten (7, 8) gebildeten Blöcken (5, 6),
**gekennzeichnet durch**
Blöcke (5), deren Blockflankenbereich, welcher beim Abrollen des Reifens zuerst mit dem Untergrund in Kontakt tritt, derart abgeschrägt ist, dass die an der Laufflächenperipherie vorliegende einlaufende Kante (9) zumindest zum Teil in Richtung der auslaufende Kante (10) versetzt worden ist.

2. Fahrzeugluftreifen nach Anspruch 1, **dadurch gekennzeichnet, dass** die durch die Abschrägung gebildete Schrägfläche (11, 12) unter einem Winkel (α) von 30° bis 60° zur radialen Richtung geneigt ist.

3. Fahrzeugluftreifen nach Anspruch 1 oder 2, **dadurch gekennzeichnet, dass** die Schrägfläche (11, 12) auf 20% bis 80% der Tiefe der Quernut (7, 8) reicht.

4. Fahrzeugluftreifen nach Anspruch 1 bis 3, **dadurch gekennzeichnet, dass** die Schrägfläche (12) dreieckförmig ist.

5. Fahrzeugluftreifen nach einem der Ansprüche 1 bis 4, **dadurch gekennzeichnet, dass** im Laufstreifen Blöcke vorhanden sind, deren eine Blockflanke, bezogen auf die eine Drehrichtung, abgeschrägt ist und Blöcke vorhanden sind, deren andere Blockflanke, bezogen auf die andere Drehrichtung, abgeschrägt ist.

6. Fahrzeugluftreifen nach einem der Ansprüche 1 bis 4, **dadurch gekennzeichnet, dass** im Laufstreifen Blöcke vorhanden sind, deren beide Blockflanken abgeschrägt sind.
